# EUROPEAN PATENT APPLICATION

(11) **EP 2 063 687 A1**
(43) Date of publication of application: **27.05.2009**
(21) Application number: 07806014.2
(22) Date of filing: 23.08.2007
(51) Int. Cl.: H05B 37/02, F21S 2/00, F21V 23/00, H01L 33/00, H05B 41/24, F21Y 101/02, G02F 1/13357

(54) **LIGHT SOURCE DRIVING CIRCUIT, LIGHT SOURCE COMPONENT PROVIDED WITH THE LIGHT SOURCE DRIVING CIRCUIT, AND DISPLAY APPARATUS**

(30) Priority: 31.08.2006 JP 2006235494
(71) Applicant: Kyocera Corporation, Kyoto-shi Kyoto 612-8501 (JP)
(72) Inventor: SHIMOYOSHI, Takeshi, Kirishima-shi Kagoshima 899-5195 (JP); USAMI, Mamoru, Kirishima-shi Kagoshima 899-5195 (JP)
(74) Representative: HOFFMANN EITLE
(86) International application number: PCT/JP2007/066385
(87) International publication number: WO 2008/026508

(57) **Abstract**

Provided are a light-source drive circuit substrate and a light source component which can drive a light source with sufficiently high light source characteristics even when environmental temperature greatly changes, and a display apparatus which includes the light source component. A light-source drive circuit (X) according to the present embodiment includes a controller (C) configured to drive a first light source (L1) and a second light source (L2) having at least one light source characteristics higher than those of the first light source (L1) when the environmental temperature is equal to or below a reference temperature. The controller (C) includes a selector (10) which selects a first driver (D1) for driving the first light source (L1) when the environmental temperature goes above the reference temperature, and selects a second driver (D2) for driving the second light source (L2) when the environmental temperature becomes equal to or below the reference temperature.

## Description

### TECHNICAL FIELD

The present invention relates to a light-source drive circuit which drives a light source such as an electrical discharge tube and a light-emitting diode, a light source component including the optical-source drive circuit, and a display apparatus.

### BACKGROUND ART

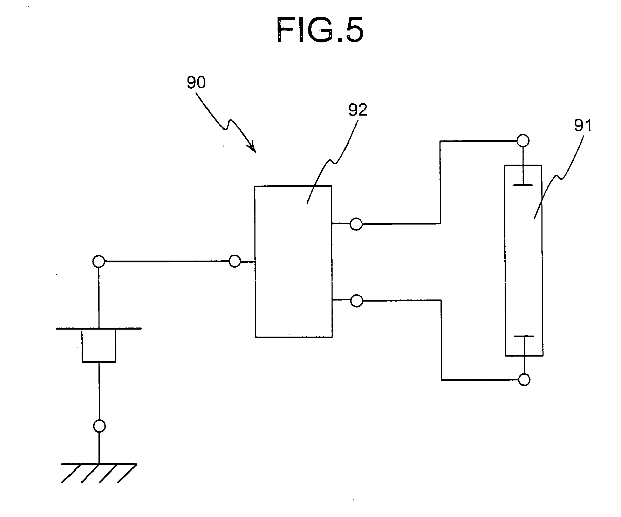

There has been developed a light source apparatus which emits light toward an object in a wide field of application. Fig. 5 shows an example of circuit configuration of a standard light source apparatus. A light source apparatus 90 includes a light source 91 such as an electrical discharge tube and a light-emitting diode, and a driver 92 which drives the light source 91. The light source apparatus 90 configured as above is disclosed, for example, in Patent Document 1.
Patent Document 1: Japanese Patent Application Laid-Open No. H2-41667

### DISCLOSURE OF INVENTION

### PROBLEM TO BE SOLVED BY THE INVENTION

The conventional light source apparatus, however, causes a problem below when the electrical discharge tube and the light-emitting diode is used as the light source 91. When the electrical discharge tube is used as the light source 91, driving the electrical discharge tube under low environmental temperature (for example, 20 degrees or lower) may overly condense mercury included inside the electrical discharge tube. The condense of mercury leads to lowering of vapor pressure, and luminance efficiency, which fluctuates depending on the vapor pressure of mercury, is significantly lowered. Further, since keeping on driving the electrical discharge tube with a significantly-lowered luminance efficiency imposes a heavy load on the electrical discharge tube, lifetime of the electrical discharge tube may be shorter. On the other hand, when the light-emitting diode (LED) is used as the light source 91, driving the LED under high environmental temperature (for example, under 40 degrees or higher) may degrade a LED chip and sealing resin which seals the LED chip. The degradation of the LED chip and the sealing resin leads to lowering of a light transmission factor, and causes light attenuation. Further, application of greater current to the LED not only enhances output (luminance) thereof but also raises the environmental temperature due to heat generation of the LED chip itself, thereby resulting in the same problem described above. As a result, the conventional light source apparatus 90 has difficulty in maintaining predetermined light source characteristics at a sufficiently high level when used on conditions that change in the environmental temperature is relatively large, e.g., when used as an indoor lighting apparatus, an outdoor street lamp, or a backlight of a liquid crystal display apparatus.

The present invention is made in view of the above, and an object of the present invention is to provide a light-source drive circuit in which the light source can be driven with the predetermined light source characteristics maintained at the sufficiently high level even when used under conditions that the environmental temperature greatly changes, to provide a light source component which includes the light-source drive circuit, and to provide a display apparatus.

### MEANS FOR SOLVING PROBLEM

A light-source drive circuit according to one of the present invention includes a controller configured to control driving of a first light source and a second light source having at least one light source characteristics higher than the first light source when environmental temperature is equal to or below a reference temperature. The controller includes a selector which selects a first driver for driving the first light source when the environmental temperature goes above the reference temperature, and selects a second driver for driving the second light source when the environmental temperature is equal to or below the reference temperature. The "reference temperature" indicates the environmental temperature to which the selector refers to select the first driver or the second driver. For example, the reference temperature is set optionally at temperature between lower-limit temperature of temperature range within which at least one of the light source characteristics of the first light source is sufficiently high and upper-limit temperature of temperature range within which the light source characteristics of the second light source are sufficiently high. The "environmental temperature" indicates temperature in environment where the first light source or the second light source is arranged, or temperature in environment where the light-source drive circuit is arranged. The "light source characteristics" indicates characteristics of the light sources such as light-emitting characteristics and lifetime characteristics, which fluctuate depending on the environment temperature. The selection criteria of the selector may be the criteria that the selector selects the first driver when the environmental temperature becomes equal to or above the reference temperature, and selects the second driver when the environmental temperature goes below the reference temperature, or that the selector selects a circuit for driving the first light source when the environmental temperature goes above the reference temperature, and selects a circuit for driving the second light source when the environmental temperature becomes equal to or below the reference temperature.

In the light-source drive circuit, the selector preferably includes a temperature dependent unit whose characteristics change depending on the environmental temperature, and a switching unit which switches between the first driver and the second driver depending on the characteristics change of the temperature dependent unit.

In the light-source drive circuit, the controller preferably further includes an adjuster which adjusts voltage or current of electricity input into the first light source or the second light source.

In the light-source drive circuit, the controller preferably further includes a feedback controller which returns a feedback signal from the first light source or the second light source to the adjuster to perform a feedback control on the adjuster. Preferably, the controller further includes a feedback controller which returns a feedback signal from the first light source or the second light source to the adjuster to perform a feedback control on the adjuster.

In the light-source drive circuit, the reference temperature preferably has a temperature width (range of temperature).

In the light-source drive circuit, the light source characteristics are preferably light-emitting characteristics.

In the light-source drive circuit, the first light source is preferably an electrical discharge tube, and the second light source is preferably a light-emitting diode.

A light source component according to one of the present invention includes a first light source, a second light source having at least one light source characteristics higher than the first light source when the environmental temperature is equal to or below the reference temperature, and the light-source drive circuit according to one of the present invention.

A display apparatus according to one of the present invention includes a display panel, and the light source component according to one of the present invention which is arranged at a position opposing to a principal surface of the display panel.

### EFFECT OF THE INVENTION

A light-source drive circuit according to one of the present invention includes a controller including a selector which selects a first driver when environmental temperature goes above a reference temperature, and selects a second driver when the environmental temperature becomes equal to or below the reference temperature. Thus, when the environmental temperature is equal to or below the reference temperature (i.e., in an undesirable use environment for a first light source), the light-source drive circuit can drive a second light source instead of driving the first light source in which at least one of light source characteristics of the second light source is higher than those of the first light source under the above-described environment. Thus, the light-source drive circuit can drive the first light source or the second light source with predetermined light source characteristics maintained at a sufficiently high level even when the environmental temperature greatly changes.

In the light-source drive circuit, when the selector includes a temperature dependent unit whose characteristics change depending on the environmental temperature, and a switching unit which switches between the first driver and the second driver depending on the characteristics change of the temperature dependent unit, then, the selector can autonomously select driving of the first light source or the second light source depending on the environmental temperature. Thus, the light source drive circuit configured as above does not require a temperature sensor which detects the environmental temperature, a microcomputer which processes an output signal from the temperature sensor to select the drivers, so that the circuit configuration can be simplified, and an apparatus including the circuit can be downsized.

In the light-source drive circuit, when the controller further includes an adjuster which adjusts voltage or current of electricity input into the first light source or the second light source, the voltage or the current of the electricity input into the first light source or the second light source can be adjusted to be at a desired value. Thus, the light-source drive circuit configured as above can provide optimized supply of electricity for the first light source and the second light source from one source of electricity.

In the light-source drive circuit, when the controller further includes a feedback controller which returns a feedback signal from the first light source or the second light source to the adjuster to perform a feedback control on the adjuster, the feedback control can be performed on the voltage or the current of the electricity supplied for the first light source or the second light source by returning the feedback signal to the adjuster. Therefore, in the light-source drive circuit, the voltage or the current of the electricity output through the adjuster can become a set value more quickly. Thus, the light-source drive circuit configured as above is suitable for stabilizing the voltage or the current of the electricity input into the first light source or the second light source, and accordingly, for stabilizing a light-emitting amount of the first light source and the second light source.

In the light-source drive circuit, when the reference temperature has a temperature width (range of temperature), a switching temperature at which the second light source is switched to the first light source and another switching temperature at which the first light source is switched to the second light source can be set at different temperatures in order that, for example, when temperature below the reference temperature goes up above upper-limit temperature of the temperature width, the second light source is switched to the first light source, whereas when temperature above the reference temperature goes down below lower-limit temperature of the temperature width, the first light source is switched to the second light source. Thus, for example, even when the environmental temperature fluctuates around the reference temperature, the light-source drive circuit can suppress frequent switching of the driving between the first light source and the second light source by making the temperature width of the reference temperature serve as so called looseness.

In the light-source drive circuit, when the light source characteristics are light-emitting characteristics, the first light source does not have to be driven under a situation where the first light source shows low light-emitting characteristics (under an undesirable use environment for the first light source) by driving the second light source whose light-emitting characteristics (e.g., luminance efficiency) are higher than those of the first light source when the environmental temperature is equal to or below the reference temperature. As a result, load on the first light source can be sufficiently reduced. Therefore, the light-source drive circuit configured as above can sufficiently suppress shortening of lifetime of the first light source. Further, when the light-emitting characteristics luminance efficiency, the light-source drive circuit configured as above can drive the first or the second light source with high luminance efficiency, so that the light-source drive circuit can sufficiently reduce applied voltage required to achieve a desired light-emitting amount. As a result, the light-source drive circuit configured as above can sufficiently reduce electric power consumption of the first light source or the second light source.

In the light-source drive circuit, when the first light source is an electrical discharge tube and the second light source is a light-emitting diode, the driving of the electrical discharge tube with relatively high luminance efficiency (light source characteristics) under high temperature is selected in a situation where the environmental temperature is above the reference temperature, whereas the driving of the light-emitting diode with relatively high luminance efficiency under low temperature is selected in a situation where the environmental temperature is equal to or below the reference temperature. Thus, the electrical discharge tube is not driven in the situation where the electrical discharge tube shows low luminance efficiency (in the situation where the environmental temperature is equal to or below the reference temperature), so that load on the electrical discharge tube can be sufficiently reduced. Thus, the light-source drive circuit configured as above can sufficiently suppress shortening of lifetime of the electrical discharge tube. Further, the light-source drive circuit configured as above can drive the electrical discharge tube or the light-emitting diode with high luminance efficiency, so that the light-source drive circuit can sufficiently reduce the applied voltage required to achieve the desired light-emitting amount. As a result, the light-source drive circuit configured as above can sufficiently reduce the electric power consumption of the electrical discharge tube or the light-emitting diode.

A light source component according to one of the present invention includes the light-source drive circuit according to one of the present invention. Hence, the light source component can provide the same advantages with the above-described advantages of the light-source drive circuit according to one of the present invention. The light source component can drive the first or the second light source with a sufficiently-high light source characteristics even when the environmental temperature greatly changes.

A display apparatus according to one of the present invention includes the light source component according to one of the present invention which is arranged at a position opposing to a principal surface of the display panel. Hence, the display apparatus can provide the same advantages with the above-described advantages of the light source component according to one of the present invention. The display apparatus can drive the first or the second light source with sufficiently-high light source characteristics even when the environmental temperature greatly changes.

### BEST MODE(S) FOR CARRYING OUT THE INVENTION

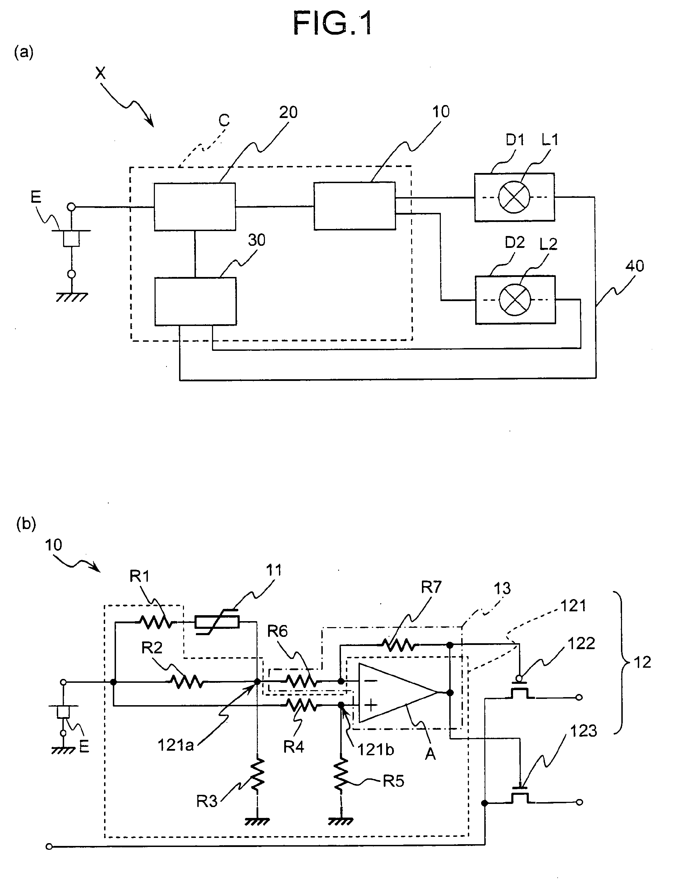

Fig. 1 shows a schematic circuit configuration of a light-source drive circuit X according to one of the present invention, (a) showing an overall diagram and (b) showing a fragmentary enlarged view.

The light-source drive circuit X includes a controller C which is, for example, formed on a substrate now shown in the figure. The light-source drive circuit X drives a lights source L1 or a light source L2 in a manner such that a desired light-emitting amount of light is emitted. The first light source L1 is a light source which shows at least one of light source characteristics at a sufficiently high level when the environmental temperature is above the reference temperature. The second light source L2 is a light source which shows the light source characteristics at a sufficiently high level when the environmental temperature is equal to or below the reference temperature. The first light source and the second light source may include a cold-cathode electrical discharge tube, a hot-cathode electrical discharge tube, a light-emitting diode, a halogen lamp, a xenon lamp, an inorganic electro luminescence, an organic electro luminescence, an incandescent lamp, or the like. The environmental temperature according to the present embodiment is temperature in the environment where the first light source L1 and the second light source L2 are arranged, or the environment where the light-source drive circuit X is arranged. Further, the light source characteristics according to present embodiment are characteristics of the first light source L1 and the second light source L2 which fluctuate depending on the environmental temperature, e.g., light-emitting characteristics or lifetime characteristics. Although descriptions are omitted, the present embodiment naturally includes required configuration (i.e., known configuration such as an oscillating circuit when the electrical discharge tube is used as the light source) for driving the first light source L1 and the second light source L2.

The controller C includes a selector 10, an adjuster 20, a feedback controller 30, and a conductive line 40. The controller C is configured to control the driving the first light source L1 and the second light source L2.

The selector 10 selects a first driver D1 for driving the first light source L1 or a second driver D2 for driving the second light source L2, according to the environmental temperature. The selector 10 is electrically connected with the first light source L1 and the second light source L2 via the conductive line 40. The selector 10 according to the present embodiment includes a temperature dependent unit 11, a switching unit 12, and a temperature width providing unit 13.

The temperature dependent unit 11 is a unit whose characteristics (electrical characteristics, mechanical characteristics, and the like) change depending on the environmental temperature, and has a function of transforming change in the environmental temperature into change in the characteristics. The temperature dependent unit 11 includes, for example, a temperature-sensitive device. The temperature-sensitive device may be a temperature-sensitive semiconductor device such as a thermistor or a temperature-sensitive diode, a temperature-sensitive reactance device such as a temperature-sensitive capacitor or a temperature sensitive inductor, or a temperature-sensitive resonant device such as a crystal oscillator. As shown by (b) in Fig. 1, in the present embodiment, the temperature dependent unit 11 includes a thermistor whose electrical resistance fluctuates depending on the change in the environmental temperature.

The switching unit 12 has a function of switching between the first driver D1 (the first light source L1) and the second driver D2 (the second light source L2) according to the characteristics change of the temperature dependent unit 11. The switching unit 12 is electrically connected with the temperature dependent unit 11, and also with the first driver D1 (the first light source L1) and the second driver D2 (the second light source L2) via the conductive line 40. The switching unit 12 is, for example, a circuit including transistors and operational amplifiers. As shown by (b) in FIG. 1, in the present embodiment, the switching unit 12 includes a comparator 121, a pMOS transistor 122, and an nMOS transistor 123. The switching unit 12 controls driving of the pMOS transistor 122 and the nMOS transistor 123 based on an output signal from the comparator 121. The comparator 121 includes electrical resistors R1 to R5, and an operational amplifier A. The comparator 121 compares a voltage value of a comparison point 121a whose electrical resistance changes depending on the temperature dependent unit (thermistor) 11 with a voltage value of a comparison point 121b whose electrical resistance does not change depending on the temperature dependent unit 11, and switches the output signal from the operational amplifier based on the environmental temperature. The pMOS transistor 122 is a device which conducts electricity between a drain and a source thereof when negative voltage is applied to a gate thereof. Further, the nMOS transistor 123 is a device which conducts electricity between a drain and a source thereof when positive voltage is applied to a gate thereof. With the configuration above, the output signal from the operational amplifier A is switched based on the comparison between the voltage value of the comparison point 121a and that of the comparison point 121b when the environmental temperature goes above the reference temperature, so that the pMOS transistor (accordingly, the first light source L1) can be driven when the environmental temperature is above the reference temperature, whereas the nMOS transistor 123 (accordingly, the second light source L2) can be driven when the environmental temperature is equal to or below the reference temperature.

The temperature width providing unit 13 provides a predetermined temperature width (range of temperature) for the reference temperature. The temperature width providing unit 13 includes electrical resistors R6, R7, and the operational amplifier A. The temperature width providing unit 13 is, for example, an electrical circuit which has history characteristics. The electrical circuit which has history characteristics is a schmitt trigger circuit or the like.

The adjuster 20 adjusts voltage of electricity input into the first light source L1 or the second light source L2. The adjuster 20 is electrically connected with an external power source E and the selector 10 (accordingly, the first light source L1 and the second light source L2) via the conductive line 40. The adjuster 20 is, for example, a voltage boost circuit and a voltage reduction circuit, a DC-DC converting circuit which has functions of boosting voltage and reducing voltage, or the like. Further, the external power source E is, for example, source of direct voltage, source of alternating voltage, constant current source, or the like.

The feedback controller 30 performs the feedback control on the adjuster 20. The feedback controller 30 is electrically connected with the first light source L1, the second light source L2, and an adjusting unit 10 via the conductive line 40 so that the feedback controller 30 can return the feedback signal from the first light source L1 and the second light source L2 to the adjuster 20. The feedback controller 30 is, for example, a circuit including the transistors, the operational amplifiers, relays, mechanical relays, and multiplexers.

The conductive line 40 electrically connects the first driver D1 (the first light source L1), the second driver D2 (the second light source L2), the external power source E, the selector 10, the adjuster 20, and the feedback controller 30 together. The conductive line 40 includes a metal such as, for example, copper, silver, gold, aluminum, platinum, and chromium, or includes alloy of those metals.

The controller C of the light-source drive circuit X according to the present embodiment includes the selector 10 which selects the first driver D1 when the environmental temperature is above the reference temperature, and selects the second driver D2 when the environmental temperature is equal to or below the reference temperature. Thus, when the environmental temperature is equal to or below the reference temperature (when the use environment is not desirable for the light source L1), the light-source drive circuit X can drive the second light source L2 which has at least one of the light source characteristics (e.g., the light-emitting characteristics) higher than the first light source L1 under the environment above without driving the first light source L1. As a result, the light-source drive circuit X can drive the first light source L1 or the second light source L2 with the sufficiently-high light source characteristics even when the environmental temperature greatly changes.

In the light-source drive circuit X, the selector 10 includes the temperature dependent unit 11 whose characteristics change depending on the environmental temperature, and the switching unit 12 which switches between the first driver D1 and the second driver D2 depending on the characteristics change of the temperature dependent unit 11. Thus, the selector 10 can autonomously select the driving of the first light source L1 or the second light source L2 depending on the environmental temperature. As a result, the light-source drive circuit X does not require a temperature sensor for detecting the environmental temperature, nor a microcomputer and the like for processing the output signal from the temperature sensor to select the drivers D1, D2, so that the circuit configuration can be simplified, and the apparatus including the light-source circuit X can be downsized.

In the light-source drive circuit X, the controller C includes the adjuster 20 which adjusts voltage or current of electricity input into the first light source L1 or the second light source L2, so that the controller C can adjust the voltage or the current of the electricity input into the first light source L1 or the second light source L2 to be a desired value. As a result, the light-source drive circuit X can provide optimized supply of electricity for the first light source L1 and the second light source L2 from one external power source E.

In the light-source drive circuit X, the controller C includes the feedback controller 30 which returns the feedback signal from the first light source L1 or the second light source L2 to the adjuster 20 to perform the feedback control on the adjuster 20. Thus, the feedback controller 30 can perform the feedback control on the voltage of the power supplied for the first light source L1 or the second light source L2 by returning the feedback signal to the adjuster 20. Therefore, in the light-source drive circuit X, the voltage or current of the electricity output via the adjuster 20 can become a set value more quickly. As a result, the light-source drive circuit X is suitable for stabilizing the voltage or the current of the electricity input into the first light source L1 or the second light source L2, and accordingly, for stabilizing the light-emitting amount of the first light source L1 and the second light source L2.

In the light-source drive circuit X, the controller C includes the temperature width providing unit 13 which provides the temperature width (range of temperature) so that a switching temperature at which the second light source L2 is switched to the first light source L1 and another switching temperature at which the first light source L1 is switched to the second light source L2 can be set at different temperatures. For example, when temperature below the reference temperature goes above upper-limit temperature of the temperature width, the second light source L2 is switched to the first light source L1, whereas when temperature above the reference temperature goes below lower-limit temperature of the temperature width, the first light source L1 is switched to the second light source L2. As a result, even when the environmental temperature fluctuates around the reference temperature, the light-source drive circuit X can suppress frequent switching of the driving between the first light source L1 and the second light source L2 by making the temperature width of the reference temperature serve as so called looseness.

In the light-source drive circuit X, when the light source characteristics are the light-emitting characteristics, the first light source L1 does not have to be driven under a situation where the first light source L1 shows low light source characteristics (under the undesirable use environment for the first light source L1) by driving the second light source L2 whose light-emitting characteristics (e.g., luminance efficiency) are higher than those of the first light source L1 when the environmental temperature is equal to or below the reference temperature. As a result, load on the first light source L1 can be sufficiently reduced. Therefore, the light-source drive circuit X can sufficiently suppress shortening of lifetime of the first light source L1. Further, when the light-emitting characteristics are luminance efficiency, the light-source drive circuit X can drive the first light source L1 or the second light source L2 with high luminance efficiency, so that the light-source drive circuit X can sufficiently reduce applied voltage required to achieve a desired light-emitting amount. As a result, the light-source drive circuit X can sufficiently reduce electric power consumption of the first light source L1 or the second light source L2.

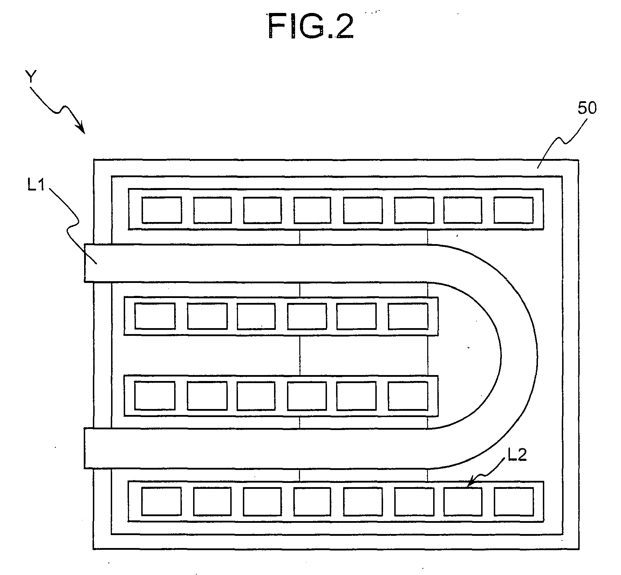

Fig. 2 shows a plan view of schematic configuration of a light source component Y including the light-source drive circuit X according to the embodiment of the present invention. In the description of the present embodiment, a cold-cathode electrical discharge tube is adopted as the first light source L1 and plural light-emitting diodes are adopted as the second light source L2.

The light source component Y includes the light-source drive circuit X, the first light source L1, the second light source L2, and the supporting base 50.

The supporting base 50 supports the first light source L1 and the second light source L2. An external shape of the supporting base 50 is substantially concave, and a concave part houses the first light source L1 and the second light source L2. The supporting base 50 is, for example, made of resin such as polycarbonate resin, metals such as stainless steel (SUS) and aluminum (Al), ceramics, or a composite of those. Further, in the present embodiment, the outer shape of the supporting base 50 is described to be substantially concave for conducting light emitted from the first light source L1 or the second light source L2 to a predetermined direction. The outer shape of the supporting base 50, however, is not limited to this.

Further, in the present embodiment, a reflective member (not shown) is arranged on a side surface and a bottom surface of the concave part of the supporting base 50. The reflective member reflects light emitted from the first light source L1 and the second light source L2. The configuration described above is suitable for more efficiently conducting light emitted from the first light source L1 or the second light source L2 in the predetermined direction. The reflective member is, for example, made of metals such as SUS and Al, white resin such as polycarbonate, a component of those, or a base made of resin such as polyethylene terephthalate whose surface is covered by a metallic film.

The light source component Y according to the present embodiment includes the light-source drive circuit X according to the present embodiment. Hence, the light source component Y can provide the same advantages with the advantages of the light-source drive circuit X described above. Thus, the light source component Y can drive the first light source L1 or the second light source L2 with the sufficiently-high light source characteristics even when the environmental temperature greatly changes.

The light source component Y adopts the cold-cathode electrical discharge tube as the first light source L1, and the light-emitting diodes as the second light source L2. Thus, the driving of the cold-cathode electrical discharge tube with relatively-high luminance efficiency (light source characteristics) under high temperature is selected in the situation where the environmental temperature is above the reference temperature, whereas the driving of the light-emitting diodes with relatively-high luminance efficiency under low temperature is selected in the situation where the environmental temperature is equal to or below the reference temperature. Thus, the cold-cathode electrical discharge tube is not driven when the environment temperature is equal to or below the reference temperature, i.e., when the cold-cathode electrical discharge tube shows low luminance efficiency (under undesirable use environment for the cold-cathode electrical discharge tube), so that load on the cold-cathode electrical discharge tube can be sufficiently reduced. Thus, the light-source component Y can sufficiently suppress shortening of lifetime of the cold-cathode electrical discharge tube. Further, the light source component Y can drive the cold-cathode electrical discharge tube or the light-emitting diodes with sufficiently-high luminance efficiency, so that the light source component Y can sufficiently reduce the applied voltage required to achieve the desired light-emitting amount. As a result, the light source component Y can sufficiently reduce the electric power consumption of the cold-cathode electrical discharge tube or the light-emitting diodes.

Fig. 3 shows a cross-sectional view of schematic configuration of a liquid crystal display apparatus Z which includes the light source component Y according to the embodiment of the present invention. The liquid crystal display apparatus Z includes the light source component Y, a liquid crystal display panel 60, and a container 70.

Fig. 4 shows a schematic configuration of the liquid crystal display panel 60, (a) showing a perspective view and (b) showing a cross-sectional view.

The liquid crystal display panel 60 includes a liquid crystal 61, a first base 62, a second base 63, and a seal member 64. In the liquid crystal display panel 60, the liquid crystal 61 is interposed between the first base 62 and the second base 63, and sealed by the seal member 64 to form a display area D.

The liquid crystal 61 is a layer including a liquid crystal which has electric, optical, mechanical, or magnetic anisotropy, and has both regularity of a solid and fluidity of a liquid. The liquid crystal is, for example, a nematic liquid crystal, a cholesteric liquid crystal, or a smectic liquid crystal.

The first base 62 is used for sealing the liquid crystal 61, and includes a transparent substrate 621 and a transparent electrode (not shown). The transparent substrate 621 supports the transparent electrode, and for example, is made of glass, translucent plastic, or the like so that light is properly transmitted in a direction intersecting with a main surface thereof. The transparent electrode of the first base 62 is used for applying predetermined voltage to the liquid crystal in the liquid crystal 61, and for example, made of translucent conductive members such as ITO (Indium Tin Oxide) and tin oxide. The translucence indicates a property that transmits a greater amount of light than a reference value. Further, the first base 62 may include a light shielding film which shields against light (an amount of transmitted light is made equal to or smaller than a predetermined value), a light reflective film which reflects light, a color filter which selectively absorbs light of a predetermined wavelength and selectively transmits light of a predetermined wavelength, a flattening film which flattens concavity and convexity caused by the arrangement of the light reflective film, the color filter, and the like, and an alignment film which aligns in a predetermined direction liquid crystal molecules in the liquid crystal 61 which are macroscopically oriented in a random direction (in other words, regularity is low), and the like.

The second base 63 is used for sealing the liquid crystal 61, and includes a transparent substrate 631 and a transparent electrode (not shown). The transparent substrate 631 supports the transparent electrode described above, and is made of the same materials as those of the transparent substrate 621 for example. The transparent electrode of the second base 63 is used for applying predetermined voltage to the liquid crystal in the liquid crystal 61, and made of the same materials as those of the transparent electrode of the first base 62 for example.

The seal member 64 is used for sealing the liquid crystal 61 between the first base 62 and the second base 63, and connecting the first base 62 and the second base 63 together in a manner such that space of a predetermined size is formed therebetween. The seal member 64 is, for example, epoxy resin adhesive, acrylic resin adhesive, or the like.

The container 70 is used for housing the liquid crystal display panel 60 and the light source component Y. The container 70 includes an upper container 71 and a lower container 72. The container 70 is, for example, made of resins such as the polycarbonate resin, or metals such as SUS and Al.

The liquid crystal display apparatus Z according to one of the present invention includes the light source component Y. Thus the liquid crystal display apparatus Z can provide the same advantages with those of the light source component Y described above. The liquid crystal display apparatus Z can drive the first light source L1 or the second light source L2 with sufficiently-high light source characteristics even when the environment temperature greatly changes.

The present invention is not limited to the embodiments which have been described above, and various modifications may be made without departing from the spirit of the inventive concepts of the present invention.

The light-source drive circuit X according to one of the present invention is described to include two types of light sources, the first light source L1 and the second light source L2. The number of types of the light sources, however, may be three or more.

In the controller C of the light-source drive circuit X according to one of the present embodiment, the circuit for driving the first light source L1 is partly integrated with the circuit for driving the second light source L2. Not limited to the configuration above, however, the circuit for driving the first light source L1 may be independently separated from the circuit for driving the second light source L2 for example.

The selector 10 of the light-source drive circuit X according to the present embodiment may, for example, include a temperature sensor for detecting the environmental temperature, and a microcomputer for processing an output signal from the temperature sensor to select the light source to be driven instead of including the temperature dependent unit 11 and the switching unit 12. In this configuration, the temperature width providing unit 13 is, for example, a computing part of the microcomputer.

The selector 10 of the light-source drive circuit X according to the present embodiment need not include the temperature width providing unit 13.

The selector 10 of the light-source drive circuit X according to the present embodiment is described to perform the switching as soon as the driving of the first light source L1 and the second light source L2 comes to a switching state (i.e., when the environmental temperature goes above the reference temperature, or when the environmental temperature goes equal to or below the reference temperature). Instead of the configuration above, the selector 10 may be configured to determine (that is, may be a delay unit) whether the switching is to be performed based on reconfirmation of the state a predetermined time after the driving of the first light source L1 and the second light source L2 comes to the switching state. With this configuration, for example, even when the environmental temperature fluctuates around the temperature width, the delay unit delays the switching timing of the driving, so that the frequent switching of the driving between the first light source L1 and the second light source L2 can be suppressed.

The adjuster 20 of the light-source drive circuit X according to the present embodiment may be a current adjusting unit for adjusting current of electricity input into the first light source L1 and the second light source L2 instead of being the voltage adjusting unit for adjusting voltage of electricity input into the first light source L1 and the second light source L2. With this configuration, the light-emitting amount of the first light source L1 or the second light source L2 can be adjusted through the current value. The current adjusting unit is, for example, a variable resistor, a constant current circuit, or the like.

In the description of the present embodiment, the liquid crystal display panel 60 is adopted as the display panel. The same advantages can be provided when a display panel which is not self-luminous is adopted instead of the liquid crystal display panel 60. The display panel which is not self-luminous is, for example, an electronic paper which uses reflected light and has a light source arranged on a front side thereof, a translucent billboard, or the like.

The liquid crystal display apparatus Z according to the present embodiment may include a phase difference film for converting elliptical polarized light which is converted from linear polarized light because of double refractivity (difference in phase) and the like of the liquid crystal back into the near-linear polarized light, a polarizing plate for selectively transmitting light which vibrates in a predetermined direction, and the like.

### BRIEF DESCRIPTION OF DRAWINGS

Fig. 1 shows a schematic circuit configuration of a circuit substrate for a light source apparatus according to an embodiment of the present invention, (a) showing an overall diagram and (b) showing a fragmentary enlarged view.
Fig. 2 shows a plan view of schematic configuration of a light source component which includes the circuit substrate for the light source apparatus according to the embodiment of the present invention.

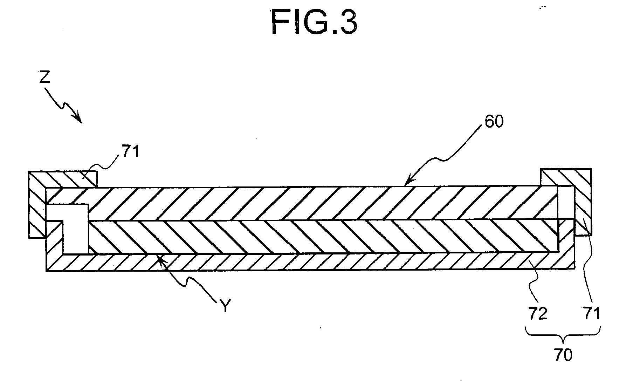

Fig. 3 shows a cross-sectional view of schematic configuration of a display apparatus Z which includes the light source component according to the embodiment of the present invention.

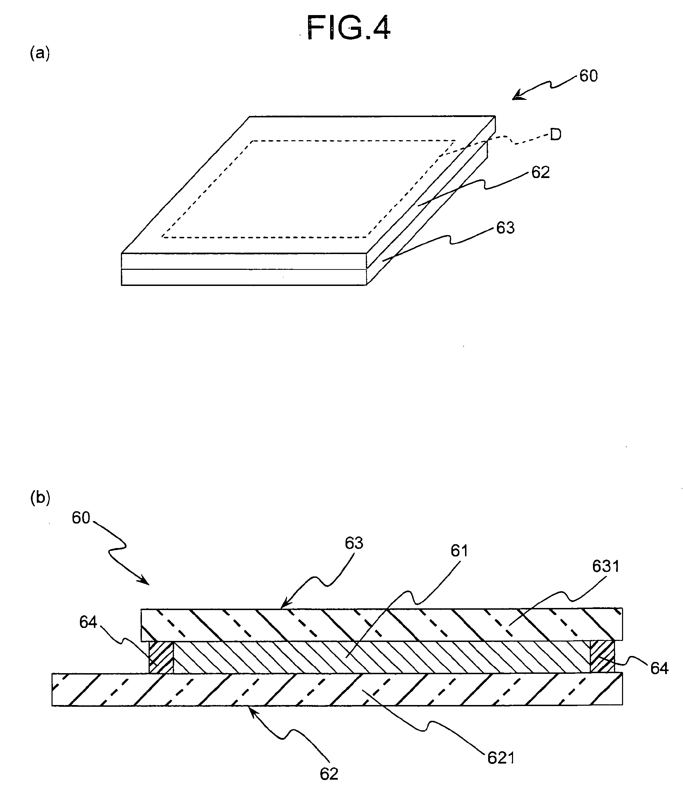

Fig. 4 shows schematic a configuration of a liquid crystal display panel shown in Fig. 3, (a) showing a perspective view and (b) showing a cross-sectional view.
Fig.5 shows example circuit configuration of a conventional light source apparatus.

### EXPLANATIONS OF LETTERS OR NUMERALS

- X: Circuit substrate for light source apparatus
- Y: Light source component
- Z: Liquid crystal display apparatus
- C: Drive circuit
- E: External power source
- L1: First light source
- L2: Second light source
- 10: Selector
- 11: Temperature dependent unit
- 12: Switching unit
- 13: Temperature width providing unit
- 20: Adjuster
- 30: Controller
- 40: Conductive line
- 50: Supporting base
- 60: Liquid crystal display panel
- 61: Liquid crystal layer
- 62: First base
- 63: Second base
- 64: Seal member
- 70: Container
- 71: Upper container
- 72: Lower container

## Claims

1. A light-source drive circuit, comprising a controller configured to control a first light source and a second light source having at least one light source characteristics higher than the first light source when environmental temperature is equal to or below a reference temperature, wherein
the controller includes a selector which selects a first driver for driving the first light source when the environmental temperature is above the reference temperature, and selects a second driver for driving the second light source when the environmental temperature is equal to or below the reference temperature.

2. The light-source drive circuit according to claim 1, wherein
the selector includes a temperature dependent unit whose characteristics change depending on the environmental temperature, and a switching unit which switches between the first driver and the second driver depending on the characteristics change of the temperature dependent unit.

3. The light-source drive circuit according to claim 1 or 2, wherein
the controller further includes an adjuster which adjusts voltage or current of electricity input into the first light source or the second light source.

4. The light-source drive circuit according to claim 3, wherein
the controller further includes a feedback controller which returns a feedback signal from the first light source or the second light source to the adjuster to perform a feedback control on the adjuster.

5. The light-source drive circuit according to any one of claims 1 to 4, wherein
the reference temperature has a temperature width.

6. The light-source drive circuit according to any one of claims 1 to 5, wherein
the light source characteristics are light-emitting characteristics.

7. The light-source drive circuit according to any one of claims 1 to 6, wherein
the first light source is an electrical discharge tube, and the second light source is a light-emitting diode.

8. A light source component, comprising:
the first light source;
the second light source which includes at least one light source characteristics higher than the first light source when environmental temperature is equal to or below the reference temperature; and
the light-source drive circuit according to any one of claims 1 to 7.

9. A display apparatus, comprising:
a display panel; and
the light source component according to claim 8 which is arranged at a position opposing to a principal surface of the display panel.
